# EUROPEAN PATENT SPECIFICATION

(11) **EP 4 131 914 B1**
(45) Date of publication and mention of the grant of the patent: **03.12.2025**
(21) Application number: 20929612.8
(22) Date of filing: 02.04.2020
(51) Int. Cl.: H04M 11/00, H04M 1/00, A24F 40/65, G06F 1/3212, H04M 1/72412

(54) **INFORMATION PROCESSING DEVICE, INFORMATION PROCESSING METHOD, AND INFORMATION PROCESSING PROGRAM**
INFORMATIONSVERARBEITUNGSVORRICHTUNG, INFORMATIONSVERARBEITUNGSVERFAHREN UND INFORMATIONSVERARBEITUNGSPROGRAMM
DISPOSITIF DE TRAITEMENT D'INFORMATIONS, PROCÉDÉ DE TRAITEMENT D'INFORMATIONS ET PROGRAMME DE TRAITEMENT D'INFORMATIONS

(43) Date of publication of application: 08.02.2023
(73) Proprietor: Japan Tobacco Inc., Tokyo 105-6927 (JP)
(72) Inventor: SENJU, Masatoshi, Tokyo 130-8603 (JP); SERITA, Kazutoshi, Tokyo 130-8603 (JP); SUGANO, Yuka, Tokyo 130-8603 (JP); TAKAYA, Saeko, Tokyo 130-8603 (JP)
(74) Representative: Hoffmann Eitle
(86) International application number: PCT/JP2020/015196
(87) International publication number: WO 2021/199406

(56) References cited:
- WO-A1-2019/162154
- JP-A- 2011 112 617
- US-A1- 2015 101 625
- US-A1- 2015 323 974
- US-A1- 2017 135 411

## Description

### FIELD

The present invention relates to an information processing device, an information processing method, and an information processing program.

### BACKGROUND

In recent years, with the spread of inhaling devices typified by electronic cigarettes and heated tobacco products, users are increasingly possessing a plurality of inhaling devices. When a user possesses a plurality of inhaling devices, it may be difficult for the user to grasp information relating to each inhaling device due to, for example, differences in the usage cycle of each inhaling device. Therefore, there is a demand for confirming, prior to use of at least one of the inhaling devices, information relating to each inhaling device.

US 2015/323974 relates to managing charging and power status for portable devices. The disclosed solution comprises determining existing battery level and charge status of a device, comparing the battery level and charge status with predicted battery usage of tasks associated with calendar events scheduled to take place before the next charge, and transmitting an alert to one or more devices when a threshold likelihood that the battery level will not be sufficient for the predicted battery usage is exceeded. The present invention advantageously displays available power based on time available for certain tasks, and manages device power and resources by modifying and/or transferring tasks from a device having a battery level below a threshold level to one or more other devices with a higher battery levels.

US 2017/135411 discloses systems, methods, and/or apparatuses for pairing with an electronic vapor (eVapor) device. In an aspect, information can be received from the eVapor device. In an aspect, the eVapor device can be caused to alter operation based on the received information.

In JP 2011 112617, during charging of a battery, charge characteristic data on the battery are transmitted from the on-vehicle device to the portable device. In the portable device, when charge information cannot be received from the on-vehicle device after pressing of a charge inquiry button to inquire of the on-vehicle device about a battery remaining amount and time until completion of charging, a battery predicted remaining amount or predicted time until completion of charging is calculated by using previously obtained charge characteristic data, and the information is displayed on a display section.

### CITATION LIST

### PATENT LITERATURE

Patent Document 1: International Publication No. 2017/153594
Patent Document 2: International Publication No. 2017/055802

### SUMMARY

### TECHNICAL PROBLEM

Patent Documents 1 and 2 disclose that an inhaling device is wirelessly connected to a user terminal such as a smartphone, in order for the user to confirm information relating to the inhaling device. In this case, when the information relating to the inhaling device must be confirmed with respect to each of a plurality of inhaling devices, the connection to the user terminal has to be made for each inhaling device, obliging the execution of multiple connection processes both bothersome and burdensome for the user.

Some aspects of the present invention have been made in view of the above-described circumstances, and it is an object of the present invention to improve the convenience of the inhaling device user.

### SOLUTION TO PROBLEM

The object is achieved by the subject-matter of the independent claims. Advantageous embodiments are defined by the dependent claims. Examples are provided to facilitate the understanding of the present disclosure. An information processing device according to an example includes an acquisition unit and a presentation unit. The acquisition unit acquires, from a first inhaling device connected to a user terminal, first state information relating to a state of the first inhaling device. The presentation unit presents, to a user, the first state information and second state information relating to a state of a second inhaling device that is not connected to the user terminal while the first inhaling device is connected.

### ADVANTAGEOUS EFFECTS OF INVENTION

According to the present invention, it is possible to improve the convenience of the user who uses the inhaling device.

### BRIEF DESCRIPTION OF THE DRAWINGS

FIG. 1 is a conceptual diagram of an information processing system including an information processing device according to an embodiment.
FIG. 2 is a diagram showing a first configuration example of an inhaling device according to the embodiment.
FIG. 3 is a diagram showing a second configuration example of an inhaling device according to the embodiment.
FIG. 4 is a block diagram showing an example of an information processing device according to the embodiment.
FIG. 5 is a flowchart showing an operation of the information processing device according to the embodiment.
FIG. 6 is a diagram showing an example of state information on an inhaling device stored in a storage section according to the embodiment.
FIG. 7 is a diagram showing a first display example of state information displayed on a user terminal according to the embodiment.
FIG. 8 is a diagram showing a second display example of state information displayed on a user terminal according to the embodiment.
FIG. 9 is a diagram showing a display example of an estimated amount of battery remaining by a presentation unit.
FIG. 10 is a diagram showing an example of the case where state information is presented according to an amount of battery remaining.

### DETAILED DESCRIPTION

Hereinafter, an information processing device, an information processing method, and an information processing program according to an embodiment of the present disclosure will be described in detail with reference to the accompanying drawings. The embodiment to be given below is an example for describing the present invention, and does not intend to limit the present invention thereto. Moreover, the present invention can be modified in various manners without departing from the gist of the invention. In the drawings, the same constituent elements will be assigned identical reference symbols where possible, and redundant descriptions will be omitted.

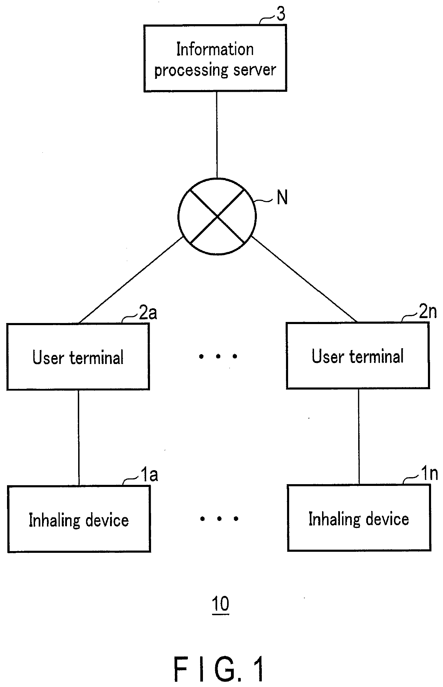

FIG. 1 is a schematic diagram of an information processing system 10 including an information processing device according to the present embodiment. As shown in FIG. 1, the information processing system 10 includes, as an example, n inhaling devices 1 (where n is a given integral value equal to or greater than 1), n user terminals 2, and an information processing server 3 configured to enable communications with the user terminal 2 via a network N. The user terminal 2 includes an information processing device according to the present embodiment.

The inhaling device 1 is also referred to as a "flavor inhaler", and takes the form of equipment for inhaling the flavor. Examples of the inhaling device 1 include an electronic tobacco and a heated tobacco product. The inhaling device 1 includes an aerosol producing device for inhaling the produced aerosol. Intended examples of the aerosol producing device include an electronic cigarette (E-vapor), a heated tobacco product (T-vapor, Infused, etc.), and a medical nebulizer. More specifically, the aerosol-producing device is, for example, a device for producing an aerosol by atomizing a liquid (aerosol source) using electric power. An aerosol takes the form of particles that are fine enough to float in the air, obtained by atomizing the aerosol source. The aerosol generated by the aerosol-producing device may be flavored. The types of the aerosol-producing device include a type that directly heats tobacco (direct heating), a type that indirectly heats tobacco (indirect heating), and a type that heats a liquid. Also, the aerosol-producing device may atomize a liquid by generating a surface acoustic wave (SAW) using a piezoelectric element substrate including a pair of comb-shaped electrodes. In FIG. 1, inhaling devices 1a and inhaling devices 1n are illustrated as n inhaling devices. In the description that follows, when the n inhaling devices 1 are not distinguished from one another, each will be simply referred to as an "inhaling device 1", with part of the reference symbol omitted.

The information processing system 10 is what is known as a "client server system". The network N is realized by, for example, the Internet, a network such as a mobile telephone network, a local area network (LAN), or a network that is a combination thereof.

The information processing server 3 is realized by, for example, at least one server. Also, the user terminal 2 is realized by, for example, a smartphone, a game console, a personal computer, etc. In FIG. 1, user terminals 2a and user terminal 2n are illustrated as n user terminals 2. When the n user terminals 2 are not distinguished from one another, each one of them will be simply referred to as a "user terminal 2", with part of the reference symbol omitted.

The inhaling device 1 and the user terminal 2 are associated with each other, and mutual data transmission and reception are enabled by executing short-range wireless communications based on, for example, Bluetooth (registered trademark), Bluetooth Low Energy (BLE), or the like. Data transmission and reception between the inhaling device 1 and the user terminal 2 may be executed by any communication technology such as Wi-Fi (registered trademark), a low-power wide-area network (LPWAN), a near-field communication (NFC), or the like, aside from BLE communication technology. Also, data transmission and reception between the inhaling device 1 and the user terminal 2 is not necessarily performed by wireless communications, and may be performed by wired communications using a Universal Serial Bus (USB), a Mini USB, a Micro USB, Lighting (registered trademark), or the like.

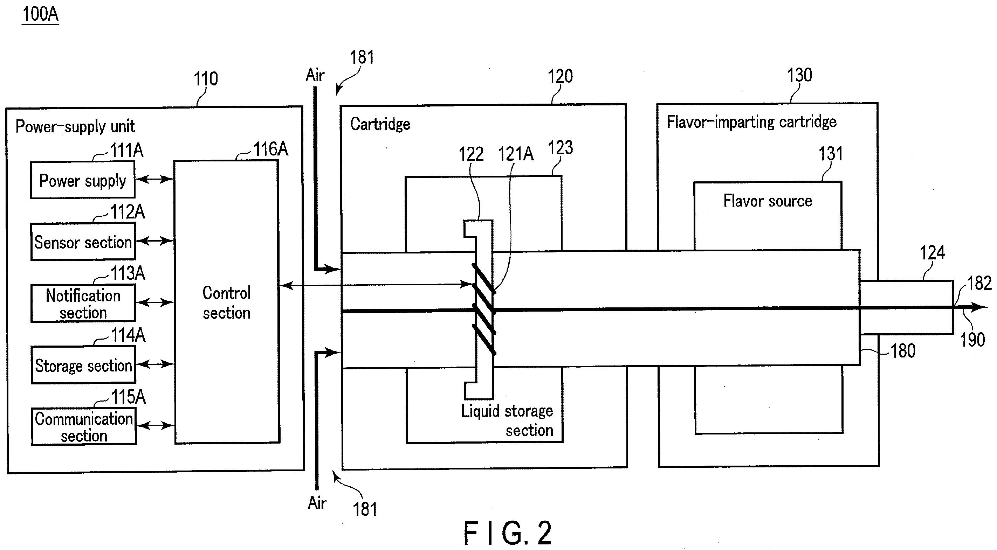

Next, a configuration example of the inhaling device will be described with reference to FIG. 2.

An inhaling device is a device that produces a substance to be inhaled by a user. In the description that follows, it is assumed that the substance produced by the inhaling device is an aerosol. In another case, the substance produced by the inhaling device may be a gas.

FIG. 2 is a schematic diagram schematically showing a first configuration example of the inhaling device. As shown in FIG. 2, an inhaling device 100A according to the present configuration example includes a power-supply unit 110, a cartridge 120, and a flavor-imparting cartridge 130. The power-supply unit 110 includes a power supply 111A, a sensor section 112A, a notification section 113A, a storage section 114A, a communication section 115A, and a control section 116A. The cartridge 120 includes a heating section 121A, a liquid guide section 122, and a liquid storage section 123. The flavor-imparting cartridge 130 includes a flavor source 131 and a mouthpiece 124. In the cartridge 120 and the flavor-imparting cartridge 130, an airflow path 180 is formed.

The power supply 111A accumulates electric power. Based on control by the control section 116A, the power supply 111A supplies power to each constituent element of the inhaling device 100A. The power supply 111A may be configured of, for example, a chargeable battery such as a lithium-ion secondary battery.

The sensor section 112A acquires various types of information relating to the inhaling device 100A. As an example, the sensor section 112A is configured of a pressure sensor such as a microphone capacitor, a flowrate sensor, a temperature sensor, etc., and acquires values involved with user inhalation. In the present embodiment, an amount of battery remaining, a number of puffs remaining, and the like are acquired by the sensor section 112A. The amount of battery remaining is of the electric power of a power source (the power supply 111A in the example of FIG. 2). The number of puffs remaining indicates the number of times of user inhalations with the inhaling device, which is, for example, the number of times of cartridge-dependent inhalations. The number of puffs remaining may be counted either by the sensor section 112A or by the information processing device to be described later. As another example, the sensor section 112A is configured of an input device which receives an information input from the user, such as a button, a switch, etc.

The notification section 113A notifies the user of the information. The notification section 113A is configured of, for example, a light-emitting device which emits light, a display device which displays an image, a sound output device which outputs sound, a vibration device which vibrates, etc. Specifically, the notification section 113A notifies values involved with user inhalation acquired by the sensor section 112A.

The storage section 114A stores various types of information for operation of the inhaling device 100A. The storage section 114A is configured of, for example, a non-volatile storage medium such as a flash memory.

The communication section 115A is a communication interface that enables communications compatible with a given wired or wireless communication standard to be performed. As such a communication standard, Wi-Fi (registered trademark), Bluetooth (registered trademark), etc., for example, may be adopted. The communication section 115A notifies values (e.g., an amount of battery remaining and a number of puffs remaining) involved with user inhalation acquired by the sensor section 112A.

The control section 116A functions as an arithmetic processor and a controller, and controls the entire operation of the inhaling device 100A in accordance with various programs. The control section 116A is realized by, for example, electronic circuitry such as a central processing unit (CPU), or a microprocessor.

The liquid storage section 123 stores an aerosol source. By atomizing the aerosol source, aerosol is produced. The aerosol source is, for example, a polyhydric alcohol such as glycerin and propylene glycol, and a liquid such as water. The aerosol source may contain a tobacco-derived or non-tobacco-derived flavor component. When the inhaling device 100A is a medical aspirator such as a nebulizer, the aerosol source may contain a drug.

The liquid guide section 122 guides the aerosol source which is a liquid stored in the liquid storage section 123 from the liquid storage section 123, and holds the aerosol source. The liquid guide section 122 is, for example, a wick formed by twisting a fiber material such as glass fiber or a porous material such as a porous ceramic. In this case, the aerosol source stored in the liquid storage section 123 is guided by the capillary effect of the wick.

The heating section 121A heats the aerosol source, atomizes the aerosol source and produce aerosol. In the example shown in FIG. 2, the heating section 121A is configured as a coil, and is wound around the liquid guide section 122. When the heating section 121A generates heat, the aerosol source held in the liquid guide section 122 is heated and atomized, thus producing aerosol. The heating section 121A generates heat when fed from the power supply 111A. As an example, feeding may be performed when the sensor section 112A has detected the commencement of inhaling by the user and/or the input of predetermined information. Feeding may be stopped when the sensor section 112A has detected the termination of inhaling by the user and/or the input of predetermined information.

The flavor source 131 is a constituent element for imparting a flavor component to aerosol. The flavor source 131 may contain a tobacco-derived or non-tobacco-derived flavor component.

The airflow path 180 is a path of air inhaled by the user. The airflow path 180 has a tubular structure including, at one of both ends, an air inflow hole 181, which is an inlet of air flowing to the airflow path 180, or an air outflow hole 182, which is an outlet of air flowing from the airflow path 180. In the middle of the airflow path 180, the liquid guide section 122 is arranged on an upstream side (the side closer to the air inflow hole 181), and a flavor source 131 is arranged on a downstream side (the side closer to the air outflow hole 182). The air flowing in from the air inflow hole 181 in accordance with user inhalation is mixed with the aerosol produced by the heating section 121A, and, as shown by an arrow 190, passes through the flavor source 131 and is transported to the air outflow hole 182. When a mixed fluid of the aerosol and air passes through the flavor source 131, a flavor component included in the flavor source 131 is imparted to the aerosol.

The mouthpiece 124 is a member which comes in contact with the user's mouth during inhaling. In the mouthpiece 124, the air outflow hole 182 is arranged. The user can introduce a mixed fluid of the aerosol and air into the oral cavity through inhalation via the mouthpiece 124 put in the user's mouth.

A configuration example of the inhaling device 100A has been described above. As a matter of course, the configuration of the inhaling device 100A is not limited to the above, and various configurations that will be described below as examples may be adopted.

As an example, the inhaling device 100A may not include a flavor-imparting cartridge 130. In this case, a mouthpiece 124 is provided in the cartridge 120.

As another example, the inhaling device 100A may include a plurality of types of aerosol sources. Still other types of aerosol may be produced by a chemical reaction caused by a plurality of types of aerosol produced by a plurality of types of aerosol sources being mixed in the airflow path 180.

Moreover, the means for atomizing the aerosol source are not limited to heating by the heating section 121A. For example, the aerosol source may be atomized by means such as vibration atomizing or induction heating.

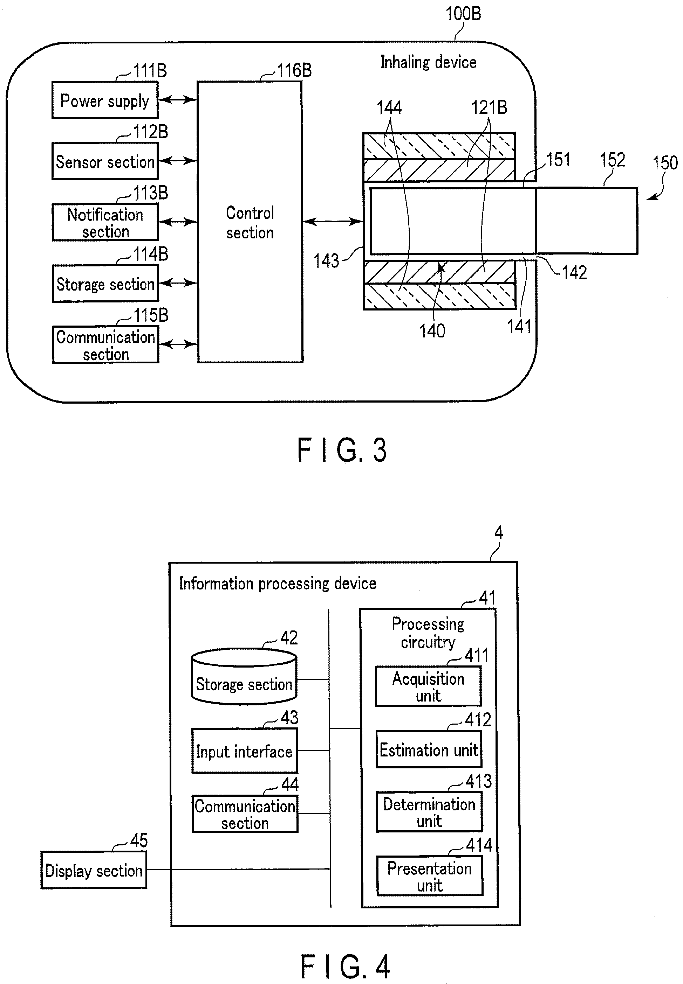

FIG. 3 is a schematic diagram schematically showing a second configuration example of the inhaling device. As shown in FIG. 3, an inhaling device 100B according to the second configuration example includes a power supply 111B, a sensor section 112B, a notification section 113B, a storage section 114B, a communication section 115B, a control section 116B, a heating section 121B, a holding part 140, and a heat-insulating part 144.

The power supply 111B, the sensor section 112B, the notification section 113B, the storage section 114B, the communication section 115B, and the control section 116B are substantially identical to the corresponding constituent elements included in the inhaling device 100A according to the first configuration example.

The holding part 140 includes an internal space 141, and holds a stick-shaped base material 150 with part of the stick-shaped base material 150 housed in the internal space 141. The holding part 140 includes an opening 142 which allows the internal space 141 to be communicated to the outside, and holds the stick-shaped base material 150 inserted into the internal space 141 from the opening 142. The holding part 140 is, for example, a tubular body including the opening 142 and a bottom portion 143 as bottom surfaces, and defines a columnar internal space 141. The holding part 140 is also equipped with a function of defining a path of air that is supplied to the stick-shaped base material 150. An air inflow hole which is an inlet of air to such a path is arranged in, for example, the bottom portion 143. On the other hand, an air outflow hole which is an outlet of air from such a path is the opening 142.

The stick-shaped base material 150 includes a base material portion 151 and a suction portion 152. The base material portion 151 includes an aerosol source. In the present configuration example, the aerosol source is not limited to a liquid, and may be a solid. With the stick-shaped base material 150 held in the holding part 140, at least part of the base material portion 151 is housed in the internal space 141, and at least part of the suction portion 152 projects from the opening 142. Through user inhalation via the suction portion 152 projecting from the opening 142 which comes into contact with the user's mouth, air flows in from an air inflow hole (not illustrated) to the internal space 141, and reaches the user's oral cavity together with the aerosol produced from the base material portion 151.

The heating section 121B has a configuration similar to that of the heating section 121A according to the first configuration example. However, in the example shown in FIG. 3, the heating section 121B is configured in a film shape, and is arranged so as to cover the outer periphery of the holding part 140. When the heating section 121B generates heat, the base material portion 151 of the stick-shaped base material 150 is heated from the outer periphery, and thereby aerosol is produced.

The heat-insulating part 144 prevents heat transfer from the heating section 121B to another constituent element. For example, the heat-insulating part 144 is configured from a vacuum-insulating material, an aerogel-insulating material, etc.

A configuration example of the inhaling device 100B has been described above. As a matter of course, the configuration of the inhaling device 100B is not limited to the above, and various configurations that will be described below as examples may be adopted.

As an example, the heating section 121B may be configured in a blade shape and arranged so as to project from the bottom portion 143 of the holding part 140 into the internal space 141. In this case, the blade-shaped heating section 121B is inserted into the base material portion 151 of the stick-shaped base material 150, and the base material portion 151 of the stick-shaped base material 150 is heated from the inside. As another example, the heating section 121B may be arranged so as to cover the bottom portion 143 of the holding part 140. Also, the heating section 121B may be configured as a combination of two or more of a first heating section that covers an outer periphery of the holding part 140, a blade-shaped second heating section, and a third heating section that covers a bottom portion 143 of the holding part 140.

As another example, the holding part 140 may include an open/close mechanism such as a hinge, which opens and closes part of an outer shell that forms the internal space 141. By opening and closing the outer shell, the holding part 140 may hold the stick-shaped base material 150 inserted into the internal space 141. In this case, the heating section 121B may be provided in the place of the holding part 140 which holds the stick-shaped base material 150, and may heat the stick-shaped base material 150 while pressing it

Moreover, the means for atomizing the aerosol source are not limited to heating by the heating section 121B. For example, the means for atomizing the aerosol source may be based on induction heating.

Also, the inhaling device 100B may further include the heating section 121A, the liquid guide section 122, the liquid storage section 123, and the airflow path 180 according to the first configuration example, and the air outflow hole 182 of the airflow path 180 may also function as an air inflow hole to the internal space 141. In this case, a mixed fluid of the aerosol and air produced by the heating section 121A flows into the internal space 141, is further mixed with the aerosol produced by the heating section 121B, and reaches the oral cavity of the user.

Next, an information processing device according to the present embodiment will be described with reference to the block diagram in FIG. 4.

The information processing device 4 according to the present embodiment includes processing circuitry 41, a storage section 42, an input interface 43, and a communication section 44. It is assumed that the information processing device 4 is included in the user terminal 2; however, the information processing device 4 may be included in another device through which the user can confirm information when the user employs the inhaling device 1, or the information processing device 4 itself may be configured as a device through which information can be confirmed.

It is assumed that the information processing device 4 according to the present embodiment displays information on an external display section 45 to be described later, such as a display of the user terminal 2; however, the display section 45 may be included in the information processing device 4.

The processing circuitry 41 is, for example, a processor such as a central processing unit (CPU), a graphics processing unit (GPU), or the like, and includes an acquisition unit 411, an estimation unit 412, a determination unit 413, and a presentation unit 414.

The acquisition unit 411 acquires, from an inhaling device 1 (also referred to as a "first inhaling device") connected to a user terminal 2, state information (also referred to as "first state information") relating to the state of the inhaling device 1. While the first inhaling device is connected to the user terminal 2, the acquisition unit 411 acquires, from the storage section 42 to be described later, state information (also referred to as "second state information") relating to a state of an unconnected inhaling device 1 (also referred to as a "second inhaling device") which is not connected to the user terminal 2. The state information includes, for example, information on the amount of battery remaining, the number of puffs remaining, and the date and time of final use indicating the date and time when the inhaling device 1 was last used. The state information is not limited to these examples, and may be any information that relates to the state of the inhaling device 1.

The estimation unit 412 estimates a current state of the unconnected inhaling device 1 based on state information stored in the storage section 42 and a length of passage of time from a point in time when the inhaling device 1 and the user terminal 2 are disconnected.

The determination unit 413 determines whether or not the state information on the inhaling device 1 indicates a value equal to or lower (or greater) than a predetermined threshold value. The determination unit 413 determines, for example, whether or not the amount of battery remaining is equal to or lower than a threshold value.

The presentation unit 414 presents state information on the connected inhaling device 1 and state information on the inhaling device 1 that is not connected to the user terminal 2 on, for example, the display section 45, to present the state information on the inhaling devices 1 to the user. The presentation unit 414 displays, on the display section 45, for example, the amount of battery remaining for the inhaling device 1. In the present embodiment, it is assumed that the state information is displayed on the display of the user terminal 2; however, the configuration is not limited thereto, and a form of synthetic speech for transmitting the state information may be produced and reproduced via a speaker or earbuds for the user.

The storage section 42 stores state information on each of a plurality of inhaling devices 1. Specifically, with respect to each of the inhaling devices 1, state information at the time of last connection to the user terminal 2 is stored. The state information stored in the storage section 42 is not limited to state information at the time of last connection to the user terminal 2, and may be state information at the time of connection at any previous point in time. Previous state information on a single inhaling device 1 may be stored as history information.

The input interface 43 is an interface that receives an input from the user. The input interface 43 receives a user input via, for example, a touch-panel display, a button, a keyboard, a mouse, or the like.

The communication section 44 is an interface via which communications compatible with a communication standard between the information processing device 4 and the inhaling device 1 are performed. The communication section 44 receives state information from the inhaling device 1 using, for example, Bluetooth. The communication standard may be any communication standard such as Bluetooth Low Energy (BLE), a near-field communication (NFC), or the like, aside from Bluetooth. When circuitry differing from the information processing device 4 included in the user terminal 2 communicates with the inhaling device 1 and acquires state information, the communication section 44 may communicate with the different circuitry in the user terminal 2 to acquire state information on the inhaling device 1. The expression "the inhaling device 1 and the user terminal 2 are connected" encompasses both of the cases where the inhaling device 1 and the information processing device 4 are connected to enable direct communications, and where the inhaling device 1 and the information processing device 4 are connected to enable communications via different circuitry in the user terminal 2.

The display section 45 is connected to the information processing device 4, and is, for example, a given display such as a liquid crystal display (LCD), a plasma display, an organic electro-luminescence display (OELD), and displays state information and the like from the presentation unit 414.

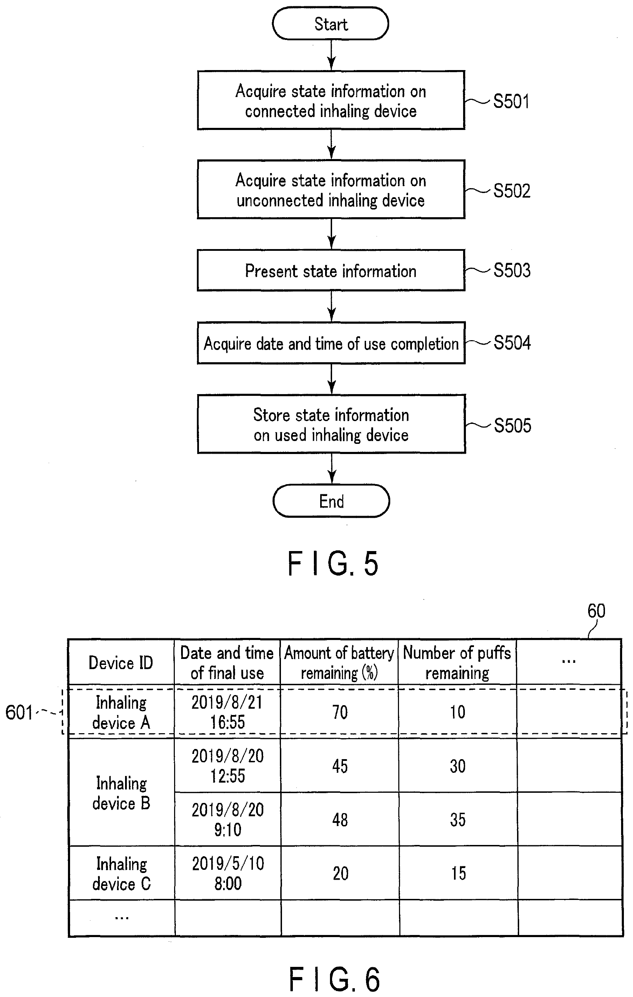

Next, an operation of the information processing device 4 according to the present embodiment will be described with reference to the flowchart in FIG. 5. At step S501, the acquisition unit 411 acquires state information from the inhaling device 1 connected to the user terminal 2. For example, prior to inhaling, the user performs a connection process to enable communications between the inhaling device 1 and the user terminal 2. Specifically, when Bluetooth is used as a communication standard, pairing is completed between the information processing device 4 and the inhaling device 1. Thereafter, when the user starts inhaling with the inhaling device 1, state information such as the amount of battery remaining and the number of puffs remaining sensed by the inhaling device 1 is transmitted to the information processing device 4. The acquisition unit 411 may acquire a date and time when the state information transmitted from the inhaling device 1 was received on the side of the information processing device 4.

The inhaling device 1 may sense the amount of battery remaining, the number of puffs remaining, and the like, and the sensed state information may be automatically transmitted to the user terminal 2, when user inhalation with the inhaling device 1 is started, instead of the user performing a connection process between the inhaling device 1 and the user terminal 2 manually. Thereafter, the acquisition unit 411 may acquire the state information via the communication section 44.

At step S502, triggered by the acquisition of inhaling information on the connected inhaling device 1 (first inhaling device 1) by the acquisition unit 411, the acquisition unit 411 acquires, from the storage section 42, state information on an unconnected inhaling device 1 (second inhaling device 1), which is not currently connected to the user terminal 2. The storage section 42 stores state information on each of the inhaling devices 1 at the time of last (or previous) connection to the user terminal 2, and the state information acquired from the storage section 42 by the acquisition unit 411 is state information on an unconnected inhaling device 1 (second inhaling device 1) stored in the storage section 42.

At step S503, the presentation unit 414 presents state information on the connected inhaling device 1 (first inhaling device 1) and state information on the unconnected inhaling device 1 (second inhaling device 1). Specifically, for example, state information on the connected inhaling device 1 (first inhaling device 1) and state information on the unconnected inhaling device 1 (second inhaling device 1) are displayed in parallel on a single screen on the user terminal display, in such a manner that the state information on the connected inhaling device 1 and the state information on the unconnected inhaling device 1 are distinguishable. The presentation unit 414 may present state information to the user while the user is using the inhaling device 1, or after the user has completed using the inhaling device 1. There may be a plurality of unconnected inhaling devices 1 (second inhaling devices 1), and in this case, the presentation unit 414 presents state information on the unconnected inhaling devices 1 (second inhaling devices 1) along with state information on the connected inhaling devices 1 (first inhaling devices 1).

At step S504, the acquisition unit 411 acquires, for example, information on a date and time of use completion of the connected inhaling device 1 (first inhaling device 1). Specifically, a point in time when the information processing device 4 received a notification indicating that the connected inhaling device 1 (first inhaling device 1) had been powered off may be acquired by the acquisition unit 411 as a date and time of use completion. A point in time when a predetermined period of time has passed since the start-up of the connection between the connected inhaling device 1 (first inhaling device 1) and the user terminal 2 and the commencement of use of the inhaling device 1 may be regarded as a single vaping action, and such a point in time may be acquired by the acquisition unit 411 as a date and time of use completion. When the date and time can be measured by the sensor section of the connected inhaling device 1 (first inhaling device 1), a point in time when the power is turned off or a predetermined period of time has passed since the start of the use may be regarded as a date and time of use completion and the date and time of use completion may be transmitted to the user terminal 2 (or the information processing device 4).

At step S505, the storage section 42 stores, as state information, the date and time of use completion acquired at step S504 in the state information as the date and time of final use of the inhaling device 1 (first inhaling device 1) that was connected, together with the amount of battery remaining, the number of puffs remaining, and the like.

Next, an example of state information on the inhaling device 1 stored in the storage section 42 will be described with reference to FIG. 6.

In a table 60 shown in FIG. 6, a device ID, a date and time of final use, an amount of battery remaining, and a number of puffs remaining are stored in association with each other as state information 601 with respect to each inhaling device 1.

It is assumed that the device ID is the product name of the inhaling device 1; however, the configuration is not limited thereto, and may be a model number or a name set by the user, or both of them may be shown. The date and time of final use is the date and time when the inhaling device ID with the device ID was last used. The amount of battery remaining is an amount of battery remaining at the date and time of final use. The number of puffs remaining indicates the number of times of inhalations remaining at the date and time of final use.

Specifically, the device ID "inhaling device A", the date and time of final use "2019/8/21 16:55", the amount of battery remaining "70", and the number of puffs remaining "10", for example, are associated with each other, and are stored as state information.

When a plurality of items of state information 601 are stored as history information, the amount of battery remaining and the number of puffs remaining may be associated and stored for each of a plurality of dates and times of final use that are present as history, with respect to a single device ID. They may be stored, for example, in a manner similar to the state information relating to the device ID "inhaling device B" in FIG. 6. The history information may be managed either by the table 60 by another table.

In the case of the processing at step S502 shown in FIG. 5, assuming, for example, that the device ID "inhaling device A" is the connected inhaling device 1 (first inhaling device 1), the acquisition unit 411 can acquire the state information 601 relating to other device IDs "inhaling device B" and "inhaling device C" from the storage section 42.

FIG. 6 shows an example in which the state information 601 is managed by a table; however, it may be stored in the storage section 42 in a comma-separated value (CSV) file format, or any other format by which the correspondence between the elements included in the state information 601 (the date and time of final use, the amount of battery remaining, the number of puffs remaining, and the like) is distinguishable.

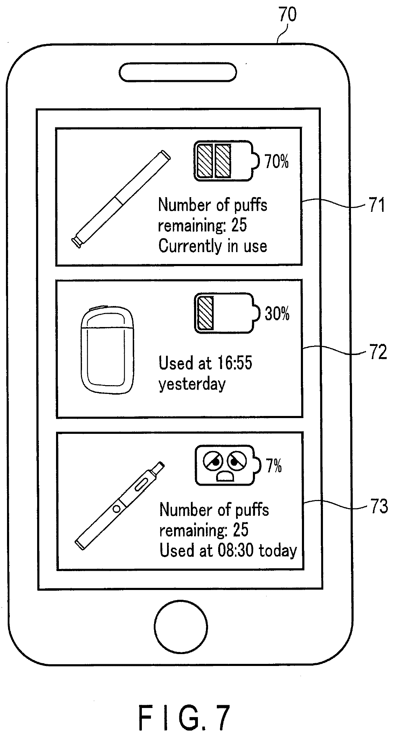

Next, a first display example of state information displayed on the user terminal 2 by the presentation unit 414 will be described with reference to FIG. 7.

FIG. 7 shows a display screen 70 displayed on a display of the user terminal 2. On the display screen 70, state information 71 relating to the connected inhaling device 1 (first inhaling device 1), state information 72 and state information 73 on two unconnected inhaling devices 1 (second inhaling devices 1) are displayed in a list format. The state information 71 relating to the connected inhaling device 1 (first inhaling device 1) is displayed on a topmost part so as to be more prominent than the state information 72 and the state information 73 on the other inhaling devices 1 that are unconnected (second inhaling devices 1). The items of state information on the unconnected inhaling devices 1 (second inhaling devices 1) are sorted from top to bottom in a reverse chronological order of the date and time of final use. In the presence of state information relating to unconnected inhaling devices 1 (second inhaling devices 1) of a number too large to be displayed on the display screen 70, the presentation unit 414 may display state information relating to all the unconnected inhaling devices 1 (second inhaling devices 1) through scrolling. Alternatively, the presentation unit 414 may display, for example, only state information on the top three frequently used inhaling devices 1. The order of the state information 71 and the state information 72 displayed on the display screen 70 is not limited to the above-described examples, and a given order may be adopted.

The state information can be made distinguishable in a given manner that allows the state information 71 to be displayed so as to be distinguishable from the state information 72 and the state information 73, by distinguishing from the other state information using colors and/or fonts, using highlighting and/or blinking, or the like.

In the example of FIG. 7, each item of state information is displayed in such a manner that the illustration of the inhaling device 1, and information on the amount of battery remaining, the number of puffs remaining, and the date and time of final use are shown in a single frame. The date and time of final use relating to the inhaling device 1 being connected is displayed as "currently in use"; however, the past date and time of final use stored in the storage section 42 may be displayed together therewith. In the example shown, the amount of battery remaining displays an icon in addition to a percentage to enable an easy grasp of the amount of battery remaining; however, only one of them may be displayed.

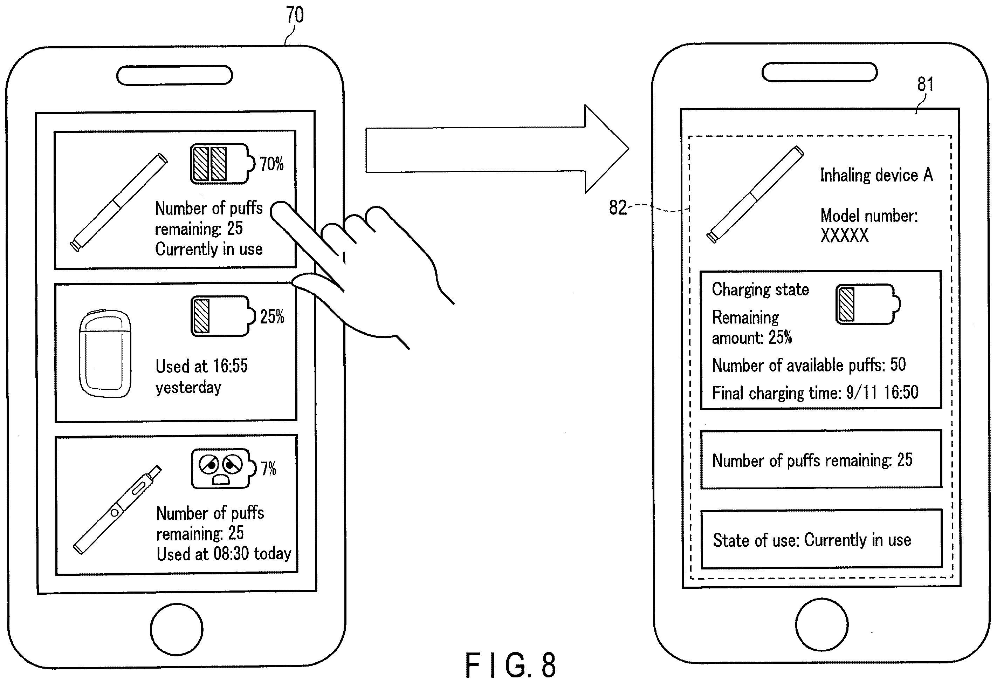

Next, a second display example of state information displayed on the user terminal 2 by the presentation unit 414 will be described with reference to FIG. 8.

FIG. 8 shows an example in which details (detailed information) of the state information on the connected inhaling device 1 (first inhaling device) are displayed in response to the user's touch on the state information 71 displayed on the display screen 70. Similarly, in response to a touch on the state information 72 and the state information 73 relating to unconnected inhaling devices 1 (second inhaling devices 1), details (detailed information) of state information on the unconnected inhaling devices 1 (second inhaling devices 1) are displayed. The detailed information is not necessarily limited to details of the state information, and any information relating to the inhaling device 1 may be included.

In response to, for example, the user's direct touch on the state information 71 or selection of the state information 71 with a cursor, the screen shifts to a detailed information display screen 81. On the detailed information display screen 81, detailed information 82 on the inhaling device A is displayed in full screen. As the detailed information 82, the name, the model number, and illustration of the inhaling device A are displayed. As the charging state, the amount of battery remaining, the number of times of available inhalations with the current amount of battery remaining, and the final charging time which is the time when the inhaling device A was last charged are displayed. In addition, the number of puffs remaining and state of use information are also displayed. The detailed information 82 is not limited thereto, and information obtained from history information such as the length of use-time during the previous vaping or any other information such as campaign information relating to the inhaling device 1 may be displayed.

In the above-described embodiment, an example has been shown in which state information on an unconnected inhaling device 1 (second inhaling device 1), for example, an amount of battery remaining at the date and time of final use is displayed with respect to the amount of battery remaining; however, an estimated amount of battery remaining that can be estimated from the date and time of final use may be displayed.

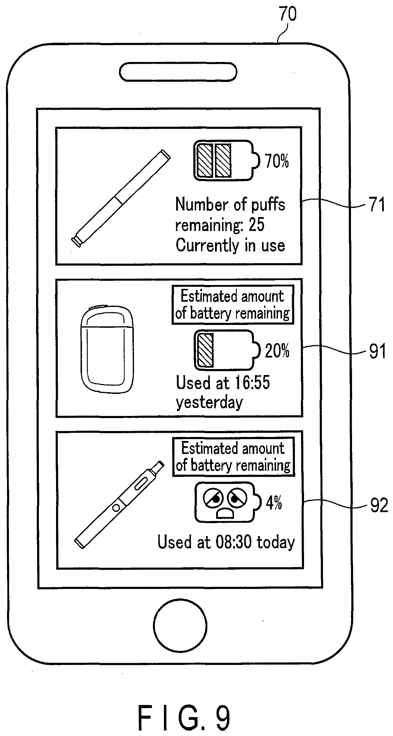

A display example of the estimated amount of battery remaining by the presentation unit 414 according to the present embodiment will be described with reference to FIG. 9.

As shown in FIG. 9, as state information 91 and state information 92 of unconnected inhaling devices 1 (second inhaling devices 1), estimated amounts of battery remaining are displayed on the display screen 70.

As a method of calculating an estimated amount of battery remaining, for example, an estimated discharge amount indicating a predicted battery discharge amount is estimated based on a length of passage of time from a point in time when the inhaling device 1 and the user terminal 2 are disconnected. Specifically, a self-discharge amount of a secondary battery used in the inhaling device 1 is stored in advance in the estimation unit 412 or the storage section 42, and the estimation unit 412 may calculate a discharge amount corresponding to the length of passage of time as an estimated discharge amount. The estimation unit 412 can calculate an estimated amount of battery remaining by obtaining a difference between the amount of battery remaining and the estimated discharge amount at the time of last connection of the unconnected inhaling device 1 (second inhaling device 1).

As shown in FIG. 9, when the estimated amount of battery remaining is displayed, it is explicitly shown as an estimated value; however, the estimated amount of battery remaining and the amount of battery remaining which is an actual measurement value at the time of last connection may be displayed in parallel.

As another method of calculating the estimated discharge amount, the estimation unit 412 calculates a difference between an amount of battery remaining of a first date and time of the last connection of the inhaling device 1 and an amount of battery remaining acquired at a second date and time at the time of subsequent connection of the inhaling device 1 to the user terminal 2, and associates the calculated amount of battery remaining with a length of passage of time between the first date and time and the second date and time. It is thereby possible to calculate an estimated discharge amount obtained by actually measuring the amount of battery remaining reached by the relevant length of passage of time, thus allowing the correct estimated discharge amount particular to the inhaling device used by the user, instead of average shipment data of a plurality of inhaling devices 1.

In the example of FIG. 9, an estimated amount of battery remaining has been described; however, the configuration is not limited thereto, and may be similarly applicable to the case where an element included in the state information is estimated. That is, the estimation unit 412 estimates, based on state information on an unconnected inhaling device 1 (second inhaling device 1) at the time of last connection to the user terminal 2 and a length of passage of time from a point in time when the unconnected inhaling device 1 and the user terminal 2 are disconnected, a current state of the unconnected inhaling device 1 (second inhaling device 1). The presentation unit 414 presents the current state of the estimated unconnected inhaling device 1 (second inhaling device 1) to the user.

When, for example, history information is stored in the storage section 42, the estimation unit 412 calculates a frequency of use of the inhaling device 1 over one week by referring to the date and time of final use in the history information, and calculates, based on a shift in the number of times of puffs remaining in the history information, a number of puffs consumed, indicating how many puffs are consumed by a single inhaling action (vaping action). The estimation unit 412 can calculate, based on the frequency of use and the number of puffs consumed, an estimated number of puffs remaining according to the number of days passed. Accordingly, the presentation unit 414 may present an estimated number of puffs remaining to the user.

In the above-described example, a case has been described where state information is presented during or after use of the inhaling device 1, triggered by acquisition of state information from the connected inhaling device 1 (first inhaling device 1). The configuration is not limited thereto, and the timing of presenting state information may be configured, as a first alternative example, in such a manner that state information is presented when the amount of battery remaining of the connected inhaling device 1 or an estimated amount of battery remaining of the unconnected inhaling device 1 (second inhaling device 1) is equal to or lower than a threshold value.

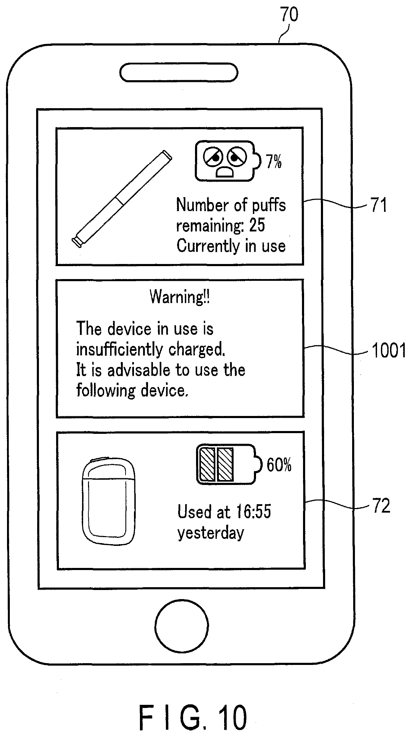

An example of the case where state information is presented according to the amount of battery remaining will be described with reference to FIG. 10.

First, the determination unit 413 determines whether or not the amount of battery remaining of the connected inhaling device 1 (first inhaling device 1) is equal to or lower than a threshold value. When the amount of battery remaining is equal to or lower than the threshold value, a message recommending, to the user, an inhaling device 1 whose amount of battery remaining is greater than the threshold value, namely, charge is left, is presented. In the example of FIG. 10, a message 1001 "The device in use is insufficiently charged. It is advisable to use the following device," is displayed, and an unconnected inhaling device 1 (second inhaling device 1) at the bottom of the message 1001 is recommended.

In this manner, considering the possibility that the currently connected inhaling device 1 (first inhaling device 1) becomes insufficiently charged and therefore unusable during inhalation, an unconnected inhaling device 1 with sufficient charge is recommended to the user. It is thereby possible for the user to prevent in advance the situation of the inhaling device 1 becoming unusable during inhalation.

When the determination unit 413 determines, upon determining whether or not the amount of battery remaining of the connected inhaling device 1 (first inhaling device 1) and the estimated amount of battery remaining of the unconnected inhaling device 1 (second inhaling device 1) are equal to or lower than a threshold value, that an inhaling device 1 whose amount of battery remaining is equal to or lower than a threshold value is present, the presentation unit 414 may present, to the user, state information on both the connected inhaling device 1 (first inhaling device 1) and the unconnected inhaling device 1 (second inhaling device 1). Alternatively, the presentation unit 414 may present, to the user, only state information on an inhaling device 1 whose amount of battery remaining is equal to or lower than a threshold value.

As a second alternative example of the timing for presenting state information, in response to the user's request to confirm the state of each inhaling device 1, state information on the connected inhaling device 1 (first inhaling device 1) and state information on the unconnected inhaling device 1 (second inhaling device 1) may be presented.

In response to, for example, the acquisition unit 411 having received an instruction from the user requesting to browse state information via the input interface 43, the presentation unit 414 presents state information on the connected inhaling device 1 (first inhaling device 1) and state information on the unconnected inhaling device 1 (second inhaling device 1). An instruction requesting browsing of state information may be issued via a user's touch on a browse button displayed, for example, on a display screen to allow the user to issue the instruction through a single action.

When an inhaling device 1 and a user terminal 2 are present in a connectible range, in response to the acquisition unit 411 having received a request from the user, the communication section 44 may automatically connect to each inhaling device 1 from the side of the user terminal 2, and operate so as to acquire the latest state information on each inhaling device 1.

As a third alternative example of the timing for presenting state information, in a case where an inhaling device 1 being charged is present, state information relating to the inhaling device 1 being charged and state information relating to the unconnected inhaling device 1 (second inhaling device 1) may be presented. When, for example, the connected inhaling device 1 (first inhaling device 1) is charged, the setting is fixed in such a manner that the state information includes information indicating that the connected inhaling device 1 is being charged. When the acquisition unit 411 acquires, from the connected inhaling device 1 (first inhaling device 1), information indicating that it is being charged, the presentation unit 414 presents, to the user, state information on the inhaling device 1 being charged and state information on the unconnected inhaling device 1 (second inhaling device 1).

It is assumed that an inhaling device 1 that has once completed a connection displays, as an unconnected inhaling device 1 (second inhaling device 1), state information on the date and time of last connection. If state information on an inhaling device 1 that the user no longer uses is stored in the storage section 42, there is a possibility that state information on such an inhaling device 1 that is not being used may be displayed, even if such a display is not desired by the user.

Thus, the presentation unit 414 may perform control in such a manner that state information on an inhaling device 1 for which a predetermined period of time has passed since the date and time of final use included in the state information is not presented to the user. Thereby, only inhaling devices 1 used most recently are displayed, allowing the user to be presented with optimum information. Also, a function of preventing the user from displaying state information manually may be provided.

According to the above-described embodiment, when an inhaling device used by the user is connected to a user terminal, state information on an unconnected inhaling device (a second inhaling device 1) is presented to the user, in addition to state information on the connected inhaling device (first inhaling device 1). This allows the user who uses a plurality of inhaling devices to grasp the state of the unconnected inhaling device (second inhaling device 1) at the final connection without the need to connect to each of the inhaling devices each time. It is thereby possible to easily grasp desired information without the burden to perform multiple connection processes. As a result, it is possible to improve the convenience of the user.

The instructions in various processes described in the above-described embodiment may be executed by a computer based on software programs.

That is, the present invention is not limited to the above-described embodiment, and the structural elements can be modified in various manners in practice without departing from the gist of the invention. In addition, various inventions can be made by suitably combining the structural elements disclosed in connection with the above-described embodiments. For example, some of the structural elements described in each of the embodiments may be deleted. Moreover, structural elements described in different embodiments may be suitably combined.

### REFERENCE SIGNS LIST

1, 100A, 100B: inhaling device, 2: user terminal, 3: information processing server, 4: information processing device, 10: information processing system, 41: processing circuitry, 42, 114A, 114B: storage section, 43: input interface, 44, 115A, 115B: communication section, 45: display section, 60: table, 70: display screen, 71, 72, 73, 91, 92, 601: state information, 81: detailed information display screen, 82: detailed information, 110: power-supply unit, 111A, 111B: power supply, 112A, 112B: sensor section, 113A, 113B: notification section, 116A, 116B: control section, 120: cartridge, 121A, 121B: heating section, 122: liquid guide section, 123: liquid storage section, 124: mouthpiece, 130: flavor-imparting cartridge, 131: flavor source, 140: holding part, 141: internal space, 142: opening, 143: bottom portion, 144: heat-insulating part, 150: stick-shaped base material, 151: base material portion, 152: suction portion, 180: airflow path, 181: air inflow hole, 182: air outflow hole, 190: arrow, 411: acquisition unit, 412: estimation unit, 413: determination unit, 414: presentation unit, 1001: message.

## Claims

1. An information processing device, comprising:
an acquisition unit configured to acquire, from a first inhaling device connected to a user terminal, first state information relating to a state of the first inhaling device; and
a presentation unit configured to present, to a user, the first state information and second state information relating to a state of one or more second inhaling devices that are not connected to the user terminal while the first inhaling device is connected; and
a determination unit configured to determine whether or not the amount of battery remaining of the first inhaling device is equal to or lower than a threshold value, wherein
the presentation unit presents, to the user, at least one of the one or more second inhaling devices in which the amount of battery remaining is greater than the threshold value in a case where the amount of battery remaining of the first inhaling device is equal to or lower than the threshold value.

2. The information processing device according to claim 1, wherein the presentation unit is configured to present, to the user, second state information at a time of last connection of the one or more second inhaling devices to the user terminal.

3. The information processing device according to claim 1 or **2,** wherein the first state information and the second state information include information relating to an amount of battery remaining.

4. The information processing device according to claim 1, further comprising:
an estimation unit configured to estimate a current state of the one or more second inhaling device based on second state information at a time of a last connection of the one or more second inhaling devices to the user terminal and a length of passage of time from a point in time when the one or more second inhaling devices and the user terminal are disconnected, wherein
the presentation unit is configured to present, to the user, an estimated current state of the one or more second inhaling devices as the second state information.

5. The information processing device according to claim 4, wherein the estimation unit is configured to estimate an estimated discharge amount based on the length of passage of time, and calculate an estimated amount of battery remaining using an amount of battery remaining included in the second state information and the estimated discharge amount.

6. The information processing device according to any one of claims 1 to 5, wherein the presentation unit is configured to present, to the user, the first state information and the second state information after the user has completed using the first inhaling device.

7. The information processing device according to any one of claims 1 to 5, wherein the presentation unit presents, to the user, the first state information and the second state information in response to a request from a user.

8. The information processing device according to any one of claims 1 to 7, wherein
the determination unit is configured to determine whether or not an amount of battery remaining of the first inhaling device and an amount of battery remaining of the one or more second inhaling devices are equal to or lower than a threshold value, and
the presentation unit is configured to present, to the user, the first state information and the second state information in a case where an inhaling device in which the amount of battery remaining is equal to or lower than the threshold value is present.

9. The information processing device according to any one of claims 1 to 8, wherein
the presentation unit is configured to present, to the user, the first state information and the second state information to the user in a case where at least one inhaling device is being charged.

10. The information processing device according to any one of claims 1 to 8, wherein
the presentation unit is configured to cause the first state information and the second state information to be displayed on a screen, cause detailed information on the first inhaling device to be displayed in a case where the first state information on the screen is selected by the user, and causes detailed information on the second inhaling device to be displayed in a case where the second state information on the screen is selected by the user.

11. The information processing device according to any one of claims 1 to 8, wherein
the presentation unit is configured to not display the second state information relating to the one or more second inhaling devices for which a predetermined period of time has passed since a last connection to the user terminal.

12. An information processing method comprising:
an acquisition step of acquiring, from a first inhaling device connected to a user terminal, first state information relating to a state of the first inhaling device;
a presentation step of presenting, to a user, the first state information and second state information relating to a state of one or more second inhaling devices not connected to the user terminal during the connection of the first inhaling device; and
a determination step of determining whether or not the amount of battery remaining of the first inhaling device is equal to or lower than a threshold value, wherein
the presentation step includes presenting, to the user, at least one of the one or more second inhaling devices in which the amount of battery remaining is greater than the threshold value in a case where the amount of battery remaining of the first inhaling device is equal to or lower than the threshold value.

13. An information processing program which causes a computer to function as:
an acquisition means for acquiring, from a first inhaling device connected to a user terminal, first state information relating to a state of the first inhaling device; and
a presentation means for presenting, to a user, the first state information and second state information relating to a state of a second inhaling device not connected to the user terminal while the first inhaling device is connected; and
a determination means for determining whether or not the amount of battery remaining of the first inhaling device is equal to or lower than a threshold value, wherein
the presentation means includes presenting, to the user, at least one of the one or more second inhaling devices in which the amount of battery remaining is greater than the threshold value in a case where the amount of battery remaining of the first inhaling device is equal to or lower than the threshold value.

## Patentansprüche

1. Informationsverarbeitungsvorrichtung, umfassend:
eine Erfassungseinheit, die dazu konfiguriert ist, von einer ersten Inhalationsvorrichtung, die mit einem Benutzerendgerät verbunden ist, erste Zustandsinformationen zu erfassen, die einen Zustand der ersten Inhalationsvorrichtung betreffen; und
eine Präsentationseinheit, die dazu konfiguriert ist, einem Benutzer die ersten Zustandsinformationen und zweite Zustandsinformationen zu präsentieren, die einen Zustand einer oder mehrerer zweiter Inhalationsvorrichtungen betreffen, die nicht mit dem Benutzerendgerät verbunden sind, während die erste Inhalationsvorrichtung verbunden ist; und
eine Bestimmungseinheit, die dazu konfiguriert ist, zu bestimmen, ob die verbleibende Batteriemenge der ersten Inhalationsvorrichtung gleich oder kleiner als ein Schwellenwert ist oder nicht, wobei
die Präsentationseinheit dem Benutzer in einem Fall, in dem die verbleibende Batteriemenge der ersten Inhalationsvorrichtung gleich oder kleiner als der Schwellenwert ist, mindestens eine der einen oder der mehreren zweiten Inhalationsvorrichtungen präsentiert, bei der die verbleibende Batteriemenge größer als der Schwellenwert ist.

2. Informationsverarbeitungsvorrichtung nach Anspruch 1, wobei die Präsentationseinheit dazu konfiguriert ist, dem Benutzer zweite Zustandsinformationen zu einer Zeit einer letzten Verbindung der einen oder der mehreren zweiten Inhalationsvorrichtungen mit dem Benutzerendgerät zu präsentieren.

3. Informationsverarbeitungsvorrichtung nach Anspruch 1 oder 2, wobei die ersten Zustandsinformationen und die zweiten Zustandsinformationen Informationen einschließen, die eine verbleibende Batteriemenge betreffen.

4. Informationsverarbeitungsvorrichtung nach Anspruch 1, weiter umfassend:
eine Schätzeinheit, die dazu konfiguriert ist, einen gegenwärtigen Zustand der einen oder der mehreren zweiten Inhalationsvorrichtungen basierend auf zweiten Zustandsinformationen zu einer Zeit einer letzten Verbindung der einen oder der mehreren zweiten Inhalationsvorrichtungen mit dem Benutzerendgerät und einer Länge einer Zeitspanne seit einem Zeitpunkt, zu dem die eine oder die mehreren zweiten Inhalationsvorrichtungen und das Benutzerendgerät getrennt wurden, zu schätzen, wobei
die Präsentationseinheit dazu konfiguriert ist, dem Benutzer einen geschätzten gegenwärtigen Zustand der einen oder der mehreren zweiten Inhalationsvorrichtungen als die zweiten Zustandsinformationen zu präsentieren.

5. Informationsverarbeitungsvorrichtung nach Anspruch 4, wobei die Schätzeinheit dazu konfiguriert ist, eine geschätzte Entladungsmenge basierend auf der Länge der Zeitspanne zu schätzen und eine geschätzte verbleibende Batteriemenge unter Verwendung einer in den zweiten Zustandsinformationen eingeschlossenen verbleibenden Batteriemenge und der geschätzten Entladungsmenge zu berechnen.

6. Informationsverarbeitungsvorrichtung nach einem der Ansprüche 1 bis 5, wobei die Präsentationseinheit dazu konfiguriert ist, dem Benutzer die ersten Zustandsinformationen und die zweiten Zustandsinformationen zu präsentieren, nachdem der Benutzer das Verwenden der ersten Inhalationsvorrichtung abgeschlossen hat.

7. Informationsverarbeitungsvorrichtung nach einem der Ansprüche 1 bis 5, wobei die Präsentationseinheit dem Benutzer die ersten Zustandsinformationen und die zweiten Zustandsinformationen als Reaktion auf eine Anfrage von einem Benutzer präsentiert.

8. Informationsverarbeitungsvorrichtung nach einem der Ansprüche 1 bis 7, wobei
die Bestimmungseinheit dazu konfiguriert ist, zu bestimmen, ob eine verbleibende Batteriemenge der ersten Inhalationsvorrichtung und eine verbleibende Batteriemenge der einen oder der mehreren zweiten Inhalationsvorrichtungen gleich oder kleiner als ein Schwellenwert sind oder nicht, und
die Präsentationseinheit dazu konfiguriert ist, dem Benutzer in einem Fall, in dem eine Inhalationsvorrichtung vorhanden ist, deren verbleibende Batteriemenge gleich oder kleiner als der Schwellenwert ist, die ersten Zustandsinformationen und die zweiten Zustandsinformationen zu präsentieren.

9. Informationsverarbeitungsvorrichtung nach einem der Ansprüche 1 bis 8, wobei
die Präsentationseinheit dazu konfiguriert ist, dem Benutzer in einem Fall, in dem mindestens eine Inhalationsvorrichtung geladen wird, die ersten Zustandsinformationen und die zweiten Zustandsinformationen zu präsentieren.

10. Informationsverarbeitungsvorrichtung nach einem der Ansprüche 1 bis 8, wobei
die Präsentationseinheit dazu konfiguriert ist, zu bewirken, dass die ersten Zustandsinformationen und die zweiten Zustandsinformationen auf einem Bildschirm angezeigt werden, zu bewirken, dass detaillierte Informationen über die erste Inhalationsvorrichtung in einem Fall angezeigt werden, in dem die ersten Zustandsinformationen auf dem Bildschirm durch den Benutzer ausgewählt werden, und zu bewirken, dass detaillierte Informationen über die zweite Inhalationsvorrichtung in einem Fall angezeigt werden, in dem die zweiten Zustandsinformationen auf dem Bildschirm durch den Benutzer ausgewählt werden.

11. Informationsverarbeitungsvorrichtung nach einem der Ansprüche 1 bis 8, wobei
die Präsentationseinheit dazu konfiguriert ist, die zweiten Zustandsinformationen, die die eine oder die mehreren zweiten Inhalationsvorrichtungen betreffen, für die seit der letzten Verbindung mit dem Benutzerendgerät eine vorbestimmte Zeitspanne verstrichen ist, nicht anzuzeigen.

12. Informationsverarbeitungsverfahren, umfassend:
einen Erfassungsschritt eines Erfassens von ersten Zustandsinformationen, die einen Zustand einer ersten Inhalationsvorrichtung betreffen, von der ersten Inhalationsvorrichtung, die mit einem Benutzerendgerät verbunden ist;
einen Präsentationsschritt eines Präsentierens der ersten Zustandsinformationen und von zweiten Zustandsinformationen, die den Zustand einer oder mehrerer zweiter Inhalationsvorrichtungen betreffen, die während der Verbindung der ersten Inhalationsvorrichtung nicht mit dem Benutzerendgerät verbunden sind, an einen Benutzer; und
einen Bestimmungsschritt eines Bestimmens, ob die verbleibende Batteriemenge der ersten Inhalationsvorrichtung gleich oder kleiner als ein Schwellenwert ist oder nicht, wobei
der Präsentationsschritt Präsentieren mindestens einer der einen oder der mehreren zweiten Inhalationsvorrichtungen, bei der die verbleibende Batteriemenge größer als der Schwellenwert ist, an den Benutzer in einem Fall einschließt, in dem die verbleibende Batteriemenge der ersten Inhalationsvorrichtung gleich oder kleiner als der Schwellenwert ist.

13. Informationsverarbeitungsprogramm, das einen Computer dazu veranlasst, zu funktionieren als:
ein Erfassungsmittel zum Erfassen von ersten Zustandsinformationen, die einen Zustand einer ersten Inhalationsvorrichtung betreffen, von der ersten Inhalationsvorrichtung, die mit einem Benutzerendgerät verbunden ist; und
ein Präsentationsmittel zum Präsentieren der ersten Zustandsinformationen und von zweiten Zustandsinformationen, die den Zustand einer oder mehrerer zweiter Inhalationsvorrichtungen betreffen, die nicht mit dem Benutzerendgerät verbunden sind, während die erste Inhalationsvorrichtung verbunden ist, an einen Benutzer; und
ein Bestimmungsmittel zum Bestimmen, ob die verbleibende Batteriemenge der ersten Inhalationsvorrichtung gleich oder kleiner als ein Schwellenwert ist oder nicht, wobei
das Präsentationsmittel Präsentieren mindestens einer der einen oder der mehreren zweiten Inhalationsvorrichtungen, bei der die verbleibende Batteriemenge größer als der Schwellenwert ist, an den Benutzer in einem Fall einschließt, in dem die verbleibende Batteriemenge der ersten Inhalationsvorrichtung gleich oder kleiner als der Schwellenwert ist.

## Revendications

1. Dispositif de traitement d'informations, comprenant :
une unité d'acquisition configurée pour acquérir, à partir d'un premier dispositif d'inhalation connecté à un terminal utilisateur, des premières informations d'état se rapportant à un état du premier dispositif d'inhalation ; et
une unité de présentation configurée pour présenter, à un utilisateur, les premières informations d'état et des secondes informations d'état se rapportant à un état d'un ou plusieurs seconds dispositifs d'inhalation qui ne sont pas connectés au terminal utilisateur pendant que le premier dispositif d'inhalation est connecté ; et
une unité de détermination configurée pour déterminer si la quantité de batterie restante du premier dispositif d'inhalation est ou non inférieure ou égale à une valeur seuil, dans lequel
l'unité de présentation présente, à l'utilisateur, au moins l'un des un ou plusieurs seconds dispositifs d'inhalation dans lesquels la quantité de batterie restante est supérieure à la valeur seuil dans un cas où la quantité de batterie restante du premier dispositif d'inhalation est inférieure ou égale à la valeur seuil.

2. Dispositif de traitement d'informations selon la revendication 1, dans lequel l'unité de présentation est configurée pour présenter, à l'utilisateur, des secondes informations d'état à un moment de dernière connexion des un ou plusieurs seconds dispositifs d'inhalation au terminal utilisateur.

3. Dispositif de traitement d'informations selon la revendication 1 ou revendication 2, dans lequel les premières informations d'état et les secondes informations d'état incluent des informations se rapportant à une quantité de batterie restante.

4. Dispositif de traitement d'informations selon la revendication 1, comprenant en outre :
une unité d'estimation configurée pour estimer un état actuel des un ou plusieurs seconds dispositifs d'inhalation sur la base de secondes informations d'état à un moment d'une dernière connexion des un ou plusieurs seconds dispositifs d'inhalation au terminal utilisateur et une durée de temps écoulé depuis un moment où les seconds dispositifs d'inhalation et le terminal utilisateur ont été déconnectés, dans lequel
l'unité de présentation est configurée pour présenter, à l'utilisateur, un état actuel estimé des un ou plusieurs seconds dispositifs d'inhalation en tant que secondes informations d'état.

5. Dispositif de traitement d'informations selon la revendication 4, dans lequel l'unité d'estimation est configurée pour estimer une quantité de décharge estimée sur la base de la durée de temps écoulé, et calculer une quantité estimée de batterie restante en utilisant une quantité de batterie restante incluse dans les secondes informations de batterie et la quantité de décharge estimée.

6. Dispositif de traitement d'informations selon l'une quelconque des revendications 1 à 5, dans lequel l'unité de présentation est configurée pour présenter, à l'utilisateur, les premières informations d'état et les secondes informations d'état après que l'utilisateur a fini d'utiliser le premier dispositif d'inhalation.

7. Dispositif de traitement d'informations selon l'une quelconque des revendications 1 à 5, dans lequel l'unité de présentation présente, à l'utilisateur, les premières informations d'état et les secondes informations d'état en réponse à une demande provenant d'un utilisateur.

8. Dispositif de traitement d'informations selon l'une quelconque des revendications 1 à 7, dans lequel
l'unité de détermination est configurée pour déterminer si une quantité de batterie restante du premier dispositif d'inhalation et une quantité de batterie restante des un ou plusieurs seconds dispositifs d'inhalation sont ou non inférieures ou égales à une valeur seuil, et
l'unité de présentation est configurée pour présenter, à l'utilisateur, les premières informations d'état et les secondes informations d'état dans un cas où un dispositif d'inhalation, dans lequel la quantité de batterie restante est inférieure ou égale à la valeur seuil, est présent.

9. Dispositif de traitement d'informations selon l'une quelconque des revendications 1 à 8, dans lequel
l'unité de présentation est configurée pour présenter, à l'utilisateur, les premières informations d'état et les secondes informations d'état dans un cas où au moins un dispositif d'inhalation est en cours de charge.

10. Dispositif de traitement d'informations selon l'une quelconque des revendications 1 à 8, dans lequel
l'unité de présentation est configurée pour amener les premières informations d'état et les secondes informations d'état à s'afficher sur un écran, amener des informations détaillées concernant le premier dispositif d'inhalation à s'afficher dans un cas où les premières informations d'état sur l'écran sont sélectionnées par l'utilisateur,
et amener des informations détaillées concernant le second dispositif d'inhalation à s'afficher dans un cas où les secondes informations d'état sur l'écran sont sélectionnées par l'utilisateur.

11. Dispositif de traitement d'informations selon l'une quelconque des revendications 1 à 8, dans lequel
l'unité de présentation est configurée pour ne pas afficher les secondes informations d'état concernant les un ou plusieurs seconds dispositifs d'inhalation pour lesquels une période de temps prédéterminée s'est écoulée depuis une dernière connexion au terminal utilisateur.

12. Procédé de traitement d'informations comprenant :
une étape d'acquisition consistant à acquérir, à partir d'un premier dispositif d'inhalation connecté à un terminal utilisateur, des premières informations d'état se rapportant à un état du premier dispositif d'inhalation ;
une étape de présentation consistant à présenter, à un utilisateur, les premières informations d'état et des secondes informations d'état se rapportant à un état d'un ou plusieurs seconds dispositifs d'inhalation non connectés au terminal utilisateur pendant la connexion du premier dispositif d'inhalation ; et
une étape de détermination consistant à déterminer si la quantité de batterie restante du premier dispositif d'inhalation est ou non inférieure ou égale à une valeur seuil, dans lequel
l'étape de présentation inclut la présentation, à l'utilisateur, d'au moins l'un des un ou plusieurs seconds dispositifs d'inhalation dans lesquels la quantité de batterie restante est supérieure à la valeur seuil dans un cas où la quantité de batterie restante du premier dispositif d'inhalation est inférieure ou égale à la valeur seuil.

13. Programme de traitement d'informations qui amène un ordinateur à servir de :
moyen d'acquisition destiné à acquérir, à partir d'un premier dispositif d'inhalation connecté à un terminal utilisateur, des premières informations d'état se rapportant à un état du premier dispositif d'inhalation ; et
moyen de présentation destiné à présenter, à un utilisateur, les premières informations d'état et des secondes informations d'état se rapportant à un état d'un second dispositif d'inhalation non connecté au terminal utilisateur pendant que le premier dispositif d'inhalation est connecté ; et
moyen de détermination destiné à déterminer si la quantité de batterie restante du premier dispositif d'inhalation est ou non inférieure ou égale à une valeur seuil, dans lequel
le moyen de présentation inclut la présentation, à l'utilisateur, d'au moins l'un des un ou plusieurs seconds dispositifs d'inhalation dans lesquels la quantité de batterie restante est supérieure à la valeur seuil dans un cas où la quantité de batterie restante du premier dispositif d'inhalation est inférieure ou égale à la valeur seuil.
